# EUROPÄISCHE PATENTSCHRIFT

(11) **EP 3 969 353 B1**
(45) Veröffentlichungstag und Bekanntmachung des Hinweises auf die Patenterteilung: **06.03.2024**
(21) Anmeldenummer: 20722262.1
(22) Anmeldetag: 22.04.2020
(51) Int. Cl.: B62D 21/11, B60K 1/04, B62D 21/15, B60K 7/00

(54) **KAROSSERIESTRUKTUR FÜR EIN ELEKTRISCH BETRIEBENES FAHRZEUG**
VEHICLE BODY STRUCTURE FOR AN ELECTRICALLY OPERATED VEHICLE
STRUCTURE DE CARROSSERIE POUR VÉHICULE À FONCTIONNEMENT ÉLECTRIQUE

(30) Priorität: 17.05.2019 DE 102019207243
(43) Veröffentlichungstag der Anmeldung: 23.03.2022
(73) Patentinhaber: Volkswagen Aktiengesellschaft, 38440 Wolfsburg (DE)
(72) Erfinder: KRAUTH, Werner, 38442 Wolfsburg (DE); SCHILLING, Thomas, 38524 Sassenburg (DE); WALLMANN, Nicole, 29379 Knesebeck (DE); UBALDO, Mario, 38448 Wolfsburg (DE); LÜKEN, Ingo, 38479 Tappenbeck (DE)
(86) Internationale Anmeldenummer: PCT/EP2020/061255
(87) Internationale Veröffentlichungsnummer: WO 2020/233932

(56) Entgegenhaltungen:
- EP-A1- 3 398 837
- EP-A1- 3 398 837
- JP-A- H07 246 842
- JP-A- H07 246 842
- JP-A- H10 291 419
- JP-A- H10 291 419
- JP-B2- 5 854 149
- JP-B2- 5 854 149

## Beschreibung

Die Erfindung betrifft eine Karosseriestruktur für ein elektrisch betriebenes Fahrzeug nach dem Oberbegriff des Anspruches 1.

Bei einem elektrisch betriebenen zweispurigen Fahrzeug kann eine Traktionsbatterie von fahrzeugunten in einen bodenseitig offenen Montageraum eingesetzt sein. Der Montageraum kann in der Fahrzeuglängsrichtung von vorderen und hinteren Batterie-Querträgern begrenzt sein und in der Fahrzeugquerrichtung durch seitliche Schweller begrenzt sein, die die vorderen/hinteren Batterie-Querträger miteinander verbindet. Die Traktionsbatterie kann an ihrem Batteriegehäuse einen umlaufenden Gehäuseflansch aufweisen. Bei in den karosserieseitigen Montageraum eingesetzter Traktionsbatterie kann der Gehäuseflansch an die Unterseite der Schweller und an die Unterseite der vorderen/hinteren Batterie-Querträger verschraubt sein.

In einer gattungsgemäßen Karosseriestruktur ist in der Fahrzeuglängsrichtung hinter dem hinteren Batterie-Querträger ein Hinterachs-Hilfsrahmen über Hilfsrahmen-Lager an der Fahrzeugkarosserie angebunden. Der Hinterachs-Hilfsrahmen weist seitliche Hilfsrahmen-Längsträger auf, die vorderen Eckknoten mit einem vorderen Hilfsrahmen-Querträger miteinander verbunden sind. Der vordere Hilfsrahmen-Querträger ist mit einem freien Längsversatz von dem zugewandten Batterie-Querträger beabstandet.

Die Traktionsbatterie weist ferner an ihrer, dem Fahrzeugheck zugewandten Rückseite eine Anschlussstelle auf, von der Versorgungsleitungen bis zu dem heckseitigen Antriebsaggregat verlegt sind. Um ein einfaches Verlegen der Versorgungsleitungen zu gewährleisten, kann der hintere Batterie-Querträger einen freien, fensterartigen Zugang aufweisen, durch den die Versorgungsleitungen bis zur batterieseitigen Anschlussstelle geführt sind. Die batterieseitige Anschlussstelle ist somit (über den fensterartigen Versorgungsleitungs-Zugang) nach fahrzeughinten freigelegt. Bei einem Heckcrash wird das heckseitige Antriebsaggregat mit einer Heckcrash-Kraft beaufschlagt, die das Antriebsaggregat in Richtung auf die batterieseitige Anschlussstelle verlagert. Dadurch besteht Gefahr, dass crashsensible Steckverbindungen an der batterieseitigen Anschlussstelle beschädigt werden können.

Aus der DE 10 2016 000 669 B3 ist eine Karosseriestruktur für ein zweispuriges Fahrzeug bekannt. Aus der DE 10 2004 062 932 B4 ist eine hintere Bodenstruktur eines Kraftfahrzeugs bekannt. Aus der JP 5 854149 B2 ist eines Elektrofahrzeuges bekannt. Die JP H07 246842 A und die JP H10 291419 A offenbaren jeweils ein Elektrofahrzeug. Aus der EP 3 398 837 A1 ist eine Fahrzeug-Frontabschnittstruktur bekannt.

Die Aufgabe der Erfindung besteht darin, eine Karosseriestruktur für ein Fahrzeug bereitzustellen, bei dem die crashsensible Traktionsbatterie in einfacher Weise vor einer heckcrashbedingten Beschädigung geschützt ist.

Die Aufgabe ist durch die Merkmale des Patentanspruches 1 gelöst. Bevorzugte Weiterbildungen der Erfindung sind in den Unteransprüchen offenbart.

Gemäß dem kennzeichnenden Teil des Anspruches 1 ist der Hinterachs-Hilfsrahmen an jedem der beiden vorderen Eckknoten mit einem Stützelement verlängert, das zumindest teilweise den freien Längsversatz zwischen dem Hilfsrahmen-Querträger und dem Batterie-Querträger überbrückt. Im Heckcrashfall ist der Hinterachs-Hilfsrahmen mit seinen beiden Stützelementen und seinen beiden Hilfsrahmen-Längsträgern sowie dem Batterie-Querträger in einen Heckcrash-Lastpfad eingebunden. Der Heckcrash-Lastpfad überbrückt weitgehend kraftfrei die batterieseitige Anschlussstelle. Von daher können im Heckcrashfall die crashsensiblen Steckverbindungen an der batterieseitigen Anschlussstelle beschädigungsfrei bleiben.

Durch Bereitstellung der Stützelemente kann also im Heckcrashfall der Hinterachs-Hilfsrahmen im Crashverlauf frühzeitig auf Block mit dem Batterie-Querträger gehen und in den Heckcrash-Lastpfad eingebunden werden, ohne dass es zu einer Beschädigung der oben erwähnten Batterie-Steckverbindungen kommt.

In einer technischen Umsetzung kann das jeweilige Stützelement den Hilfsrahmen-Querträger mit einem Überstand nach fahrzeugvorne überragen. Das Stützelement kann über einen, im Vergleich zum Längsversatz wesentlich geringeren Montage-Freigang vom Batterie-Querträger beabstandet sein, wodurch eine störkonturfreie Montage des Hilfsrahmens an der Fahrzeugkarosserie gewährleistet ist. Im Heckcrashfall kann der Hilfsrahmen nach fahrzeugvorne verlagert werden, und zwar unter Aufbrauch des geringfügigen Montage-Freigangs bis in Anschlag mit dem Batterie-Querträger.

Das Stützelement kann im Hinblick auf einen einwandfreien Kraftfluss der Heckcrashkraft eine frontseitige Stützfläche aufweisen. Diese wirkt im Heckcrashfall mit einem Anschlagprofilteil des Batterie-Querträgers kraftübertragend zusammen. Sowohl die hilfsrahmenseitige Stützfläche als auch eine damit zusammenwirkende Anschlagfläche des Anschlagprofilteils können im Wesentlichen komplett in einer Vertikal-Querebene liegen und/oder zueinander planparallel ausgerichtet sein.

In der Fahrzeugquerrichtung kann zwischen den beiden Stützelementen ein freier Zwischenraum aufgespannt sein, der in der Fahrzeuglängsrichtung betrachtet jeweils vom Hilfsrahmen-Querträger und vom Batterie-Querträger begrenzt ist.

Der Batterie-Querträger kann, in der Fahrzeugquerrichtung betrachtet dreiteilig aufgebaut sein, und zwar mit den beiden fahrzeugäußeren Querträger-Anschlagprofilteilen und einem mittleren Querträger-Mittelsegment. Die beiden Querträger-Anschlagprofilteile können zusammen mit dem Querträger-Mittelsegment einen fensterartigen freien Zugang für Versorgungsleitungen begrenzen, die zwischen einer batterieseitigen Anschlussstelle und dem heckseitigen Antriebsaggregat verlegt sind.

Im Hinblick auf eine bauteilsteife Realisierung kann das Anschlagprofilteil des Batterie-Querträgers ein Hohlträger mit im Querschnitt geschlossenen Hohlprofil sein. Die, dem Hilfsrahmen zugewandte Anschlagfläche kann von einer heckseitigen Rückwand des Anschlagprofilteils ausgebildet sein. Zur weiteren Steigerung der Bauteilsteifigkeit kann in dem Hohlprofil des Anschlagprofilteils zumindest ein Schottelement angeordnet sein. Das Schottelement kann zwischen der Rückwand und einer, der Traktionsbatterie zugewandten Vorderwand des Anschlagprofilteils abgestützt sein.

Zur weiteren Steigerung der Bauteilsteifigkeit im Heckcrashfall kann das Anschlagprofilteil des Batterie-Querträgers zusammen mit einem, den Batterie-Montageraum begrenzenden Seitenschweller und einem karosserieseitigen Heck-Längsträger an einem gemeinsamen Karosserieknoten zusammenlaufen.

Nachfolgend ist ein Ausführungsbeispiel der Erfindung anhand der beigefügten Figuren beschrieben.

Es zeigen:
- Figur 1: in einer perspektivischen Teilansicht eine Karosseriestruktur eines zweispurigen Kraftfahrzeugs;
- Figur 2: in einer perspektivischen Ansicht eine Traktionsbatterie in Alleinstellung;
- Figur 3: in einer Detailansicht einen auf der Oberseite der Traktionsbatterie befindlichen Medienkanal;
- Figur 4: in einer Teilansicht von unten die Karosseriestruktur des Kraftfahrzeugs mit darin verbauter Traktionsbatterie;
- Figur 5: eine perspektivische Teilansicht von fahrzeugunten auf die Karosseriestruktur; und
- Figur 6: eine Teilschnittdarstellung entlang einer Schnittebene xz.

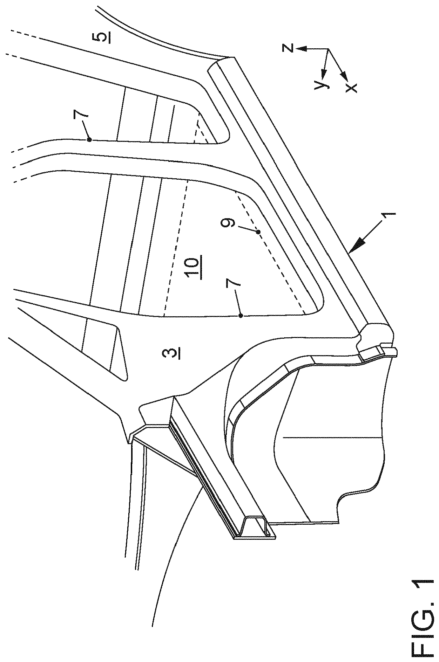

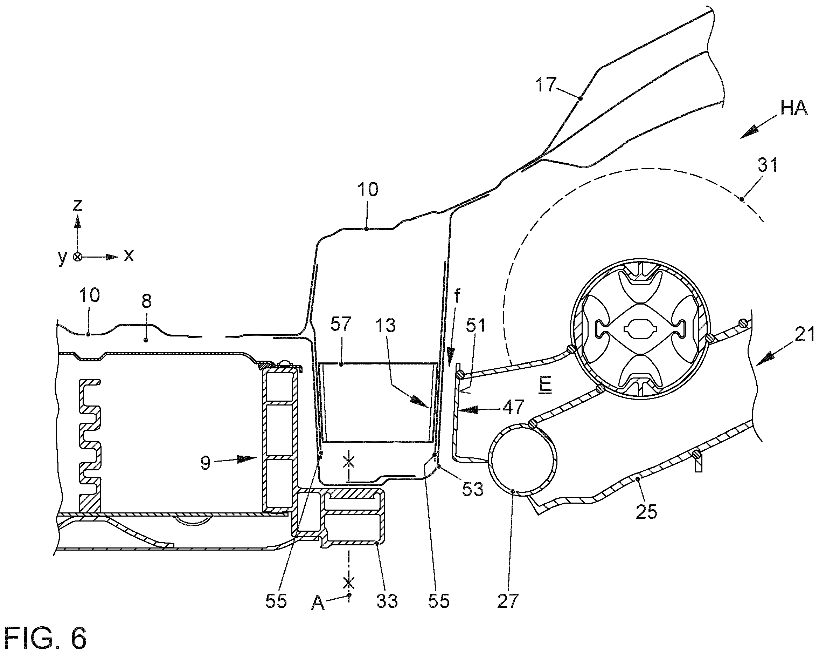

In der Figur 1 ist eine Karosseriestruktur eines zweispurigen Fahrzeugs gezeigt, die nachfolgend insoweit beschrieben ist, als es für das Verständnis der Erfindung erforderlich ist. Demzufolge weist die Karosseriestruktur zwei seitliche, in der Fahrzeuglängsrichtung x verlaufende Schweller 1 auf, von denen in der Figur 1 lediglich einer gezeigt ist. Der Schweller 1 erstreckt sich in der Fahrzeuglängsrichtung x zwischen einer vorderen A-Säule 3 sowie einer hinteren C-Säule 5 und begrenzt bodenseitig Seitentüröffnungen 7. Im Fahrzeugboden der Karosseriestruktur ist eine crashsensible Traktionsbatterie 9 verbaut. Diese ist unterhalb eines Bodenblechteils 10 in einem Montageraum 8 (Figur 6) positioniert. Der Montageraum 8 erstreckt sich in der Fahrzeugquerrichtung y zwischen den beiden Schwellern 1. In der Fahrzeuglängsrichtung x erstreckt sich Montageraum 8 zwischen einem nicht gezeigten vorderen Batterie-Querträger und einem in den Figuren gezeigten hinteren Batterie-Querträger 13.

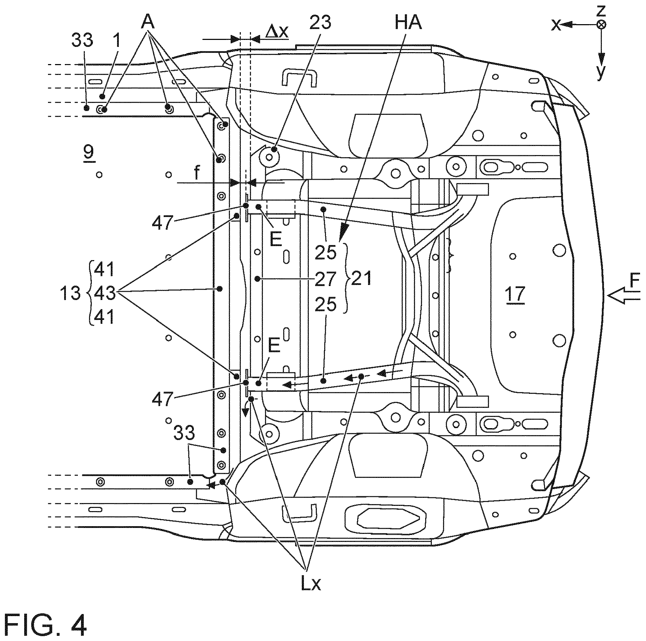

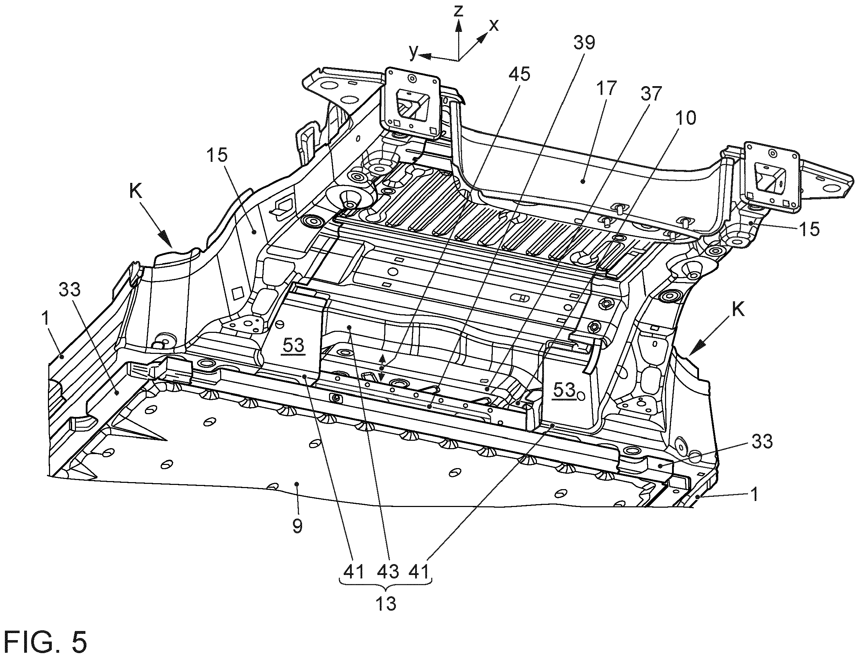

In der Figur 5 geht jeder Schweller 1 im weiteren Verlauf nach fahrzeughinten an einem Karosserieknoten K jeweils in einen heckseitigen Karosserie-Längsträger 15 über. Zwischen den beiden heckseitigen Karosserie-Längsträgern 15 ist eine Heck-Bodengruppe 17 (Figuren 4 oder 6) angebunden. In der Figur 5 laufen am Karosserieknoten K somit der Schweller 1, der hintere Batterie-Querträger 13 und der heckseitige Karosserie-Längsträger 15 zusammen.

Die beiden heckseitigen Karosserie-Längsträger 15 weisen an ihrer Unterseite Anbindungsstellen 19 auf, an die ein Hinterachs-Hilfsrahmen 21 (Figur 4) über Hilfsrahmen-Lager 23 anbindbar ist. Der Hinterachs-Hilfsrahmen 21 ist Bestandteil einer FahrzeugHinterachse HA (Figur 4 oder 6).

Der Hinterachs-Hilfsrahmen 21 ist in der Figur 4 geschlossen rahmenförmig ausgebildet, und zwar mit seitlichen Hilfsrahmen-Längsträgers 25 und vorderen/hinteren Hilfsrahmen-Querträgern 27. Die beiden seitlichen Hilfsrahmen-Längsträger 25 sind an vorderen Eckknoten E (Figur 4) mit dem vorderen Hilfsrahmen-Querträger 27 verbunden. In der Figur 4 ist der vordere Hilfsrahmen-Querträger 27 mit einem freien Längsversatz Δx von dem Batterie-Querträger 13 beabstandet. Der vordere Hilfsrahmen-Querträger 27 ist in der Figur 4 beidseitig nach fahrzeugaußen mit einem Seitensegment 29 verlängert, an dessen fahrzeugäußerem Ende jeweils das Hilfsrahmen-Lager 23 positioniert ist, das am jeweiligen heckseitigen Karosserie-Längsträger 15 angebunden ist. Der Hinterachs-Hilfsrahmen 21 trägt ein elektrisch betriebenes Antriebsaggregat mit einem in der Figur 6 gestrichelt angedeuteten Elektromotor 31.

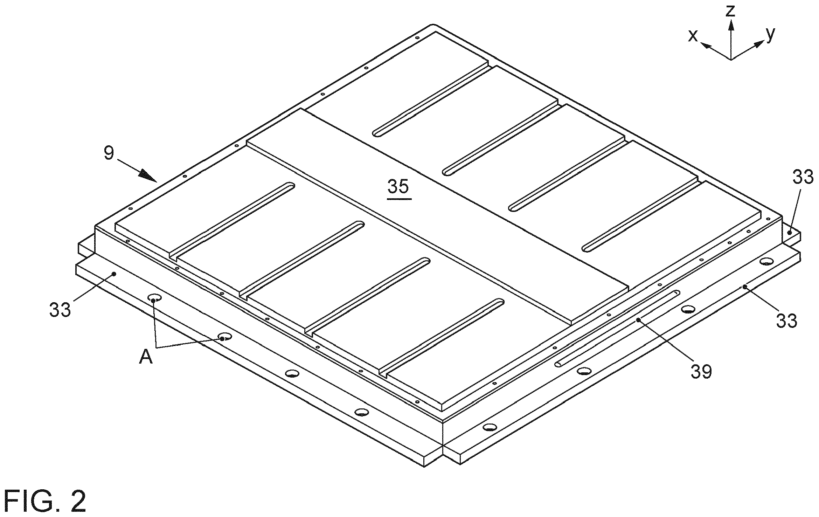

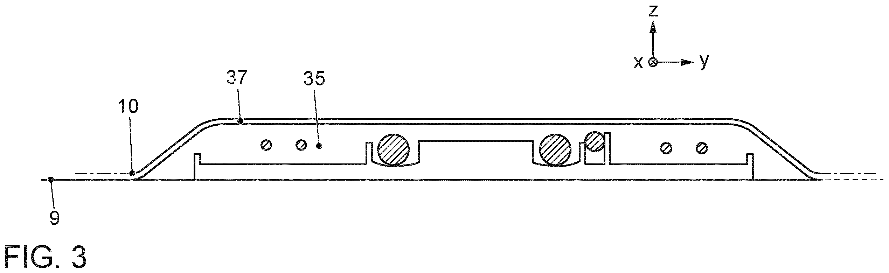

Die beiden Schweller 1 sowie die vorderen und hinteren Batterie-Querträger 13 begrenzen den bodenseitig offenen Montageraum 8, in den die Traktionsbatterie 9 von fahrzeugunten einsetzbar ist. Die Traktionsbatterie 9 weist in der Figur 2 an ihrem Batteriegehäuse einen umlaufenden Gehäuseflansch 33 auf. Dieser ist bei in den Montageraum 8 eingesetzter Traktionsbatterie 9 an die Unterseite der Schweller 1 und an die Unterseite der Batterie-Querträger 13 an Anbindungsstellen A (Figur 2 oder 4) verschraubbar. In der Figur 2 weist die Traktionsbatterie 9 an ihrer Oberseite einen mittig in der Fahrzeuglängsrichtung x verlaufenden Medienkanal 35 (Figur 2 und Figur 3) auf, in den Versorgungsleitungen der Traktionsbatterie 9 verlegt sind. Der Medienkanal 35 ist in der Figur 3 nach fahrzeugoben durch einen im Bodenblechteil 10 eingeprägten Mitteltunnel 37 begrenzt. Zudem weist die Traktionsbatterie 9 an ihrer, dem Fahrzeugheck zugewandten Rückseite eine Anschlussstelle 39 (Figuren 2 oder 5) auf, von der nicht gezeigte Versorgungsleitungen bis zu dem heckseitigen Antriebsaggregat verlegt sind. Die Versorgungsleitungen sind in gängiger Praxis in Steckverbindung mit der batterieseitigen Anschlussstelle 39.

In der Figur 4 oder 5 ist der hinteren Batterie-Querträger 13 dreiteilig aufgebaut, und zwar mit der Fahrzeugquerrichtung y äußeren Querträger-Anschlagprofilteilen 41, deren Funktion nachfolgend beschrieben ist, und einen Querträger-Mittelsegment 43, das die beiden Querträger-Anschlagprofilteile 41 miteinander verbindet. Die beiden Querträger-Anschlagprofilteile 41 begrenzen zusammen mit dem Querträger-Mittelsegment 43 einen fensterartigen Zugang 45 (Figur 5). Durch den im Batterie-Querträger 13 gebildeten freien fensterartigen Zugang 45 können die Versorgungsleitungen bis zur batterieseitigen Anschlussstelle 39 verlegt und dort in Steckverbindung gebracht werden.

Damit in einem Heckcrashfall eine heckcrashbedingte Beschädigung der crashsensiblen Steckverbindungen der batterieseitigen Anschlussstelle 39 verhindert wird, sind die nachfolgend beschriebenen Maßnahmen betroffen: So ist der Hilfsrahmen 21 an jedem seiner vorderen Eckknoten E mit einem Stützelement 47 verlängert. Das Stützelement 47 überbrückt in der Fahrzeuglängsrichtung x teilweise den freien Längsversatz Δx zwischen dem Hilfsrahmen-Querträger 27 und dem Batterie-Querträger 13. In der Figur 4 oder 6 verbleibt lediglich ein geringfügiger Montage-Freigang f zwischen dem Stützelement 47 und dem Batterie-Querträger 13. Im Heckcrashfall wird der Hinterachs-Hilfsrahmen 21 mit einer Heckcrashkraft F (Figur 4) beaufschlagt. Der Hinterachs-Hilfsrahmen 21 wird dadurch nach fahrzeugvorne verlagert, und zwar unter Aufbrauch des geringfügigen Montage-Freigangs f. Dadurch ergibt sich frühzeitig im Crashverlauf ein Heckcrash-Lastpfad Iₓ, bei dem die Heckcrashkraft F über die Hilfsrahmen-Längsträger 25 sowie die Stützelemente 47 in die Anschlagprofilteile 41 des hinteren Batterie-Querträgers 13 einleitbar sind, und zwar unter weitgehend kraftfreier Überbrückung der batterieseitigen Anschlussstelle 39. Eine crashbedingte Beschädigung der batterieseitigen Anschlussstelle 39 kann somit verhindert werden.

Wie aus der Figur 4 weiter hervorgeht, überragt das Stützelement 47 den vorderen Hilfsrahmen-Querträger 27 mit einem Überstand nach fahrzeugvorne. Die beiden Stützelemente 47 sowie die beiden Querträger 27, 13 spannen einen freien Zwischenraum, wodurch eine störkonturfreie Montage der Hinterachse HA gewährleistet ist.

Um eine einwandfreie Kraftfluß im Heckcrash-Lastpfad Lₓ zu gewährleisten, weist das Stützelement 47 in der Figur 6 eine frontseitige Stützfläche 51 auf, die mit einer gegenüberliegenden Anschlagfläche 55 des Anschlagprofilsteils 41 zueinander planparallel ausgerichtet ist.

Im Hinblick auf eine gesteigerte Bauteilsteifigkeit ist das Anschlagprofilteil 41 des hinteren Batterie-Querträgers 13 als ein Hohlträger mit im Querschnitt geschlossenem Hohlprofil realisiert. Die Anschlagfläche 53 ist dabei an einer, dem Hilfsrahmen 21 zugewandten Rückwand 55 des Anschlagprofilteils 41 ausgebildet. Zur weiteren Steigerung der Bauteilsteifigkeit ist im Hohlprofil des Anschlagprofilteils 41 ein Schottelement 57 angeordnet. Das Schottelement 57 ist in der Figur 6 zwischen der Profil-Rückwand 55 und einer, der Traktionsbatterie 9 zugewandten Profil-Vorderwand 59 abgestützt.

### Bezugszeichenliste

- 1: Schweller
- 3: A-Säule
- 5: C-Säule
- 7: Seitentüröffnung
- 8: Traktionsbatterie-Montageraum
- 9: Traktionsbatterie
- 10: Bodenblechteil
- 13: hinterer Batterie-Querträger
- 15: heckseitiger Karosserie-Längsträger
- 17: Heck-Bodengruppe
- 19: Anbindungsstellen
- 21: Hinterachs-Hilfsrahmen
- 23: Hilfsrahmen-Lager
- 25: Hilfsrahmen-Längsträger
- 27: Hilfsrahmen-Querträger
- 29: Seitensegment
- 31: Elektromaschine
- 33: Gehäuseflansch
- 35: Medienkanal
- 37: Mitteltunnel
- 39: batterieseitige Anschlussstelle
- 41: Anschlagprofilteil
- 43: Querträger-Mittelsegment
- 45: fensterartiger Zugang
- 47: Stützelement
- 51: Stützfläche
- 53: Anschlagfläche
- 55: Profil-Rückwand
- 57: Schottelemente
- 59: Profil-Vorderwand
- K: Karosserieknoten
- E: Eckknoten
- A: Anbindungsstellen
- Δx: Längsversatz
- f: Montagefreigang
- Lₓ: Heckcrash-Lastpfad
- HA: Hinterachse
- F: Heckcrashkraft

## Patentansprüche

1. Karosseriestruktur für ein elektrisch betriebenes Fahrzeug, mit einem in der Fahrzeughochrichtung (z) nach fahrzeugunten offenen Montageraum (8) für eine Traktionsbatterie (9), der nach fahrzeugoben von einem, den Fahrzeugboden bildenden Bodenblechteil (10) begrenzt ist und in der Fahrzeuglängsrichtung (x) nach fahrzeughinten durch einen karosserieseitigen Batterie-Querträger (13) begrenzt ist, wobei in der Fahrzeuglängsrichtung (x) hinter dem Batterie-Querträger (13) ein Hinterachs-Hilfsrahmen (21) über Hilfsrahmen-Lager (23) an der Fahrzeugkarosserie angebunden ist, wobei der Hinterachs-Hilfsrahmen (21) seitliche Hilfsrahmen-Längsträger (25) aufweist, die an vorderen Eckknoten (E) mit einem vorderen Hilfsrahmen-Querträger (27) verbunden sind, wobei der vordere Hilfsrahmen-Querträger (27) mit einem Längsversatz (Δx) von dem Batterie-Querträger (13) beabstandet ist, **dadurch gekennzeichnet, dass** der Hinterachs-Hilfsrahmen (21) an jedem der beiden vorderen Eckknoten (E) mit einem Stützelement (47) verlängert ist, das zumindest teilweise den freien Längsversatz (Δx) zwischen dem Hilfsrahmen-Querträger (27) und dem Batterie-Querträger (13) überbrückt, und dass im Heckcrashfall der Hinterachs-Hilfsrahmen (21) mit seinen beiden Stützelementen (47) und seinen beiden Hilfsrahmen-Längsträgern (25) und dem Batterie-Querträger (13) in einen Heckcrash-Lastpfad (Lₓ) eingebunden ist.

2. Karosseriestruktur nach Anspruch 1, **dadurch gekennzeichnet, dass** das Stützelement (47) den Hilfsrahmen-Querträger (27) mit einem Überstand nach fahrzeugvorne überragt, und/oder dass das Stützelement (47) über einen im Vergleich zum Längsversatz (Δx) geringen Montage-Freigang (f) vom Batterie-Querträger (13) beabstandet ist, und dass im Heckcrashfall der Hinterachs-Hilfsrahmen (21) nach fahrzeugvorne verlagerbar ist, und zwar unter Aufbrauch des Montage-Freigangs (f).

3. Karosseriestruktur nach Anspruch 1 oder 2, **dadurch gekennzeichnet, dass** das Stützelement (47) eine frontseitige Stützfläche (51) aufweist, die im Heckcrashfall mit einem Anschlagprofilteil (41) des Batterie-Querträgers (13) zusammenwirkt, und dass insbesondere sowohl die hilfsrahmenseitige Stützfläche (51) als auch eine damit zusammenwirkende Anschlagfläche (53) des Anschlagprofilteils (41) jeweils komplett in einer Vertikal-Querebene liegen und/oder zueinander planparallel sind.

4. Karosseriestruktur nach einem der Ansprüche 1 bis 3, **dadurch gekennzeichnet, dass** in der Fahrzeugquerrichtung (y) zwischen den beiden Stützelementen (47) sowie in der Fahrzeuglängsrichtung (x) zwischen den beiden Querträgern (13, 27) ein freier Zwischenraum aufgespannt ist.

5. Karosseriestruktur nach einem der vorhergehenden Ansprüche, **dadurch gekennzeichnet, dass** der Batterie-Querträger (13) in der Fahrzeugquerrichtung (y) dreiteilig aufgebaut ist, und zwar mit den seitlich äußeren Querträger-Anschlagprofilteilen (41) und einem Querträger-Mittelsegment (43), das die beiden Querträger-Anschlagprofilteilen (41) miteinander verbindet, und dass insbesondere die beiden Querträger-Anschlagprofilteile (41) und das Querträger-Mittelsegment (43) einen fensterartigen Zugang (45) für Versorgungsleitungen begrenzen, die zwischen einer batterieseitigen Anschlussstelle (39) und dem Antriebsaggregat verlegt sind.

6. Karosseriestruktur nach einem der Ansprüche 3 bis 5, **dadurch gekennzeichnet, dass** das Anschlagprofilteil (41) des Batterie-Querträgers (13) ein Hohlträger mit im Querschnitt geschlossenem Hohlprofil ist, und dass insbesondere die Anschlagfläche (53) an einer dem Hinterachs-Hilfsrahmen (21) zugewandten Rückwand (55) des Anschlagprofilteils (41) ausgebildet ist.

7. Karosseriestruktur nach Anspruch 6, **dadurch gekennzeichnet, dass** zur Steigerung der Bauteilsteifigkeit im Hohlprofil des Anschlagprofilteils (41) zumindest ein Schottelement (57) angeordnet ist, und dass insbesondere das Schottelement (57) zwischen der Rückwand (55) und einer, der Traktionsbatterie (9) zugewandten Vorderwand (59) des Anschlagprofilteils (41) abgestützt ist.

8. Karosseriestruktur nach einem der Ansprüche 3 bis 7, **dadurch gekennzeichnet, dass** zur Steigerung der Bauteilsteifigkeit im Heckcrashfall das Anschlagprofilteil (41) des Batterie-Querträgers (13) zusammen mit einem den Batterie-Montageraum (8) begrenzenden Seitenschweller (1) und einem karosserieseitigen Heck-Längsträger (15) an einem Karosserieknoten (K) zusammenlaufen, und/oder dass insbesondere das Anschlagprofilteil (41) des Batterie-Querträgers (13) nach fahrzeugvorne mit dem Schweller (1) einen vorderen Inneneckbereich des Montageraums (8) aufspannt, und/oder dass insbesondere das Anschlagprofilteil (41) des Batterie-Querträgers (13) nach fahrzeughinten mit dem heckseitigen Karosserie-Längsträger (15) einen hinteren Inneneckbereich aufspannt, der die Heck-Bodengruppe (15) einfasst.

## Claims

1. Body structure for an electrically operated vehicle, comprising an installation space (8) for a traction battery (9), which installation space is open in the vehicle vertical direction (z), is delimited toward the upper side of the vehicle by a floor panel part (10) forming the vehicle floor and is delimited in the vehicle longitudinal direction (x) toward the rear of the vehicle by a body-side battery cross-member (13), a rear-axle subframe (21) being connected to the vehicle body via subframe bearings (23) in the vehicle longitudinal direction (x) behind the battery cross-member (13), the rear-axle subframe (21) comprising lateral subframe longitudinal members (25), which are connected to a front subframe cross-member (27) at front corner nodes (E), the front subframe cross-member (27) being spaced apart from the battery cross-member (13) by a longitudinal offset (Δx), **characterized in that** the rear-axle subframe (21) is elongated at each of the two front corner nodes (E) by a support element (47) which at least partially bridges the free longitudinal offset (Δx) between the subframe cross-member (27) and the battery cross-member (13), and **in that** in the event of a rear collision, the rear-axle subframe (21) with its two support elements (47) and its two subframe longitudinal members (25) and the battery cross-member (13) are integrated into a rear collision load path (Lₓ).

2. Body structure according to claim 1, **characterized in that** the support element (47) projects with an overhang beyond the subframe cross-member (27) toward the front of the vehicle and/or **in that** the support element (47) is spaced apart from the battery cross-member (13) by a installation clearance (f) which is small compared to the longitudinal offset (Δx), and **in that**, in the event of a rear collision, the rear-axle subframe (21) can be displaced toward the front of the vehicle, namely by using up the installation clearance (f).

3. Body structure according to claim 1 or 2, **characterized in that** the support element (47) comprises a front-side support surface (51) which, in the event of a rear collision, interacts with a stop profile part (41) of the battery cross-member (13), and that in particular both the subframe-side support surface (51) and a stop surface (53) of the stop profile part (41) interacting therewith each lie completely within a vertical-transverse plane and/or are plane parallel to one another.

4. Body structure according to any of claims 1 to 3, **characterized in that** a free gap is spanned in the vehicle-transverse direction (y) between the two support elements (47) and in the vehicle longitudinal direction (x) between the two crossmembers (13, 27).

5. Body structure according to any of the preceding claims,
**characterized in that** the battery cross-member (13) is constructed in three parts in the vehicle transverse direction (y), namely by means of the laterally outer cross-member stop profile parts (41) and a cross-member-central segment (43) which interconnects the two cross-member stop profile parts (41), and **in that** in particular the two cross-member stop profile parts (41) and the cross-member central segment (43) delimit a window-like access (45) for supply lines which are laid between a battery-side connection point (39) and the drive unit.

6. Body structure according to any of claims 3 to 5, **characterized in that** the stop profile part (41) of the battery cross-member (13) is a hollow carrier having a hollow profile which is closed in cross section, and **in that** in particular the stop surface (53) is formed on a rear wall (55) of the stop profile part (41) facing the rear-axle subframe (21).

7. Body structure according to claim 6, **characterized in that,** in order to increase component stiffness, at least one bulkhead element (57) is arranged in the hollow profile of the stop profile part (41), and **in that** in particular the bulkhead element (57) is supported between the rear wall (55) and a front wall (59) of the stop profile part (41) that faces the traction battery (9).

8. Body structure according to any of claims 3 to 7, **characterized in that,** in order to increase component stiffness in the event of a rear collision, the stop profile part (41) of the battery cross member (13) together with a side sill (1) delimiting the battery assembly space (8) and a rear longitudinal member (15) on the body side converge at a body node (K), and/or **in that** in particular the stop profile part (41) of the battery cross member (13) spans a front inside corner region of the installation space (8) toward the front of the vehicle with the sill (1), and/or **in that** in particular the stop profile part (41) of the battery cross member (13) spans a rear inside corner region toward the rear of the vehicle with the rearside body longitudinal members (15), which rear corner region encloses the rear floor group (15).

## Revendications

1. Structure de carrosserie pour un véhicule fonctionnant électriquement, comportant un espace de montage (8) ouvert vers le bas du véhicule dans le sens de la hauteur du véhicule (z) pour une batterie de traction (9), lequel espace de montage est limité vers le haut du véhicule par une pièce en tôle de plancher (10) formant le plancher du véhicule et est limité vers l'arrière du véhicule, dans le sens longitudinal du véhicule (x), par une traverse de batterie (13) côté carrosserie, dans laquelle, dans le sens longitudinal du véhicule (x), derrière la traverse de batterie (13), un faux châssis d'essieu arrière (21) est relié à la carrosserie de véhicule par l'intermédiaire de paliers de faux châssis (23), dans laquelle le faux châssis d'essieu arrière (21) présente des longerons de faux châssis (25) latéraux qui sont reliés à une traverse de faux châssis (27) avant au niveau de noeuds d'angle avant (E), dans laquelle la traverse de faux châssis (27) avant est espacée de la traverse de batterie (13) d'un décalage longitudinal (Δx),
**caractérisée en ce que** le faux châssis d'essieu arrière (21) est prolongé sur chacun des deux noeuds d'angle avant (E) par un élément de support (47) qui surmonte au moins partiellement le décalage longitudinal (Δx) libre entre la traverse de faux châssis (27) et la traverse de batterie (13), et **en ce que**, en cas de collision arrière, le faux châssis d'essieu arrière (21) est intégré dans un trajet de charge de collision arrière (Lₓ) avec ses deux éléments de support (47) et ses deux longerons de faux châssis (25) et la traverse de batterie (13).

2. Structure de carrosserie selon la revendication 1, **caractérisée en ce que** l'élément de support (47) fait saillie depuis la traverse de faux châssis (27) avec un dépassement vers l'avant du véhicule **et/ou en ce que** l'élément de support (47) est espacé de la traverse de batterie (13) par l'intermédiaire d'un dégagement de montage (f) faible par rapport au décalage longitudinal (Δx), et **en ce que**, en cas de collision arrière, le faux châssis d'essieu arrière (21) peut être déplacé vers l'avant du véhicule, à savoir en utilisant le dégagement de montage (f).

3. Structure de carrosserie selon la revendication 1 ou 2,
**caractérisée en ce que** l'élément de support (47) présente une surface de support (51) côté frontal qui, en cas de collision arrière, coopère avec une partie profilée de butée (41) de la traverse de batterie (13), **et en ce que,** en particulier, à la fois la surface d'appui (51) côté faux châssis et une surface de butée (53) coopérant avec celle-ci de la partie profilée de butée (41) se trouvent respectivement entièrement dans un plan transversal vertical et/ou sont planes et parallèles l'une par rapport à l'autre.

4. Structure de carrosserie selon l'une des revendications 1 à 3, **caractérisée en ce qu'**un espace intermédiaire libre est ménagé entre les deux éléments de support (47) dans le sens transversal du véhicule (y) et entre les deux traverses (13, 27) dans le sens longitudinal du véhicule (x).

5. Structure de carrosserie selon l'une des revendications précédentes, **caractérisée en ce que** la traverse de batterie (13) est conçue en trois parties dans le sens transversal du véhicule (y), à savoir avec les parties profilées de butée de traverse (41) latérales extérieures et un segment central de traverse (43) qui relie les deux parties profilées de butée de traverse (41) l'une à l'autre, **et en ce que,** en particulier, les deux parties profilées de butée de traverse (41) et le segment central de traverse (43) délimitent un accès (45) en forme de fenêtre pour des conduites d'alimentation qui sont posées entre un point de connexion (39) côté batterie et l'unité d'entraînement.

6. Structure de carrosserie selon l'une des revendications 3 à 5, **caractérisée en ce que** la pièce profilée de butée (41) de la traverse de batterie (13) est une poutre creuse comportant un profil creux fermé en section transversale, **et en ce que,** en particulier, la surface de butée (53) est réalisée sur une paroi arrière (55) de la partie profilée de butée (41), laquelle paroi arrière est tournée vers le faux châssis d'essieu arrière (21).

7. Structure de carrosserie selon la revendication 6, **caractérisée en ce que,** pour augmenter la rigidité du composant, au moins un élément de cloisonnement (57) est disposé dans le profil creux de la pièce profilée de butée (41), **et en ce que,** en particulier, l'élément de cloisonnement (57) est supporté entre la paroi arrière (55) et une paroi avant (59) de la partie profilée de butée (41), laquelle paroi avant est tournée vers la batterie de traction (9).

8. Structure de carrosserie selon l'une des revendications 3 à 7, **caractérisée en ce que,** pour augmenter la rigidité du composant en cas de collision arrière, la partie profilée de butée (41) de la traverse de batterie (13) converge, conjointement avec une jupe latérale (1), laquelle délimite l'espace de montage de batterie (8), et un longeron arrière (15) côté carrosserie, vers un noeud de carrosserie (K), **et/ou en ce que,** en particulier, la partie profilée de butée (41) de la traverse de batterie (13) ménage avec la jupe latérale (1) une zone d'angle intérieur avant de l'espace de montage (8) vers l'avant du véhicule, **et/ou en ce que,** en particulier, la partie profilée de butée (41) de la traverse de batterie (13) ménage avec le longeron de carrosserie (15) côté arrière une zone d'angle intérieur arrière vers l'arrière du véhicule, laquelle zone entoure l'ensemble plancher arrière (15).
